Europäisches Patentamt

(19) European Patent Office

Office européen des brevets

(11) Publication number: **0 001 337**

A1

## (12) EUROPEAN PATENT APPLICATION

(21) Application number: 78300355.1

(22) Date of filing: 06.09.78

(51) Int. Cl.²: **B 60 G 3/06**
    **B 60 G 7/02**

(30) Priority: 06.09.77 GB 37224/77

(43) Date of publication of application:
04.04.79 Bulletin 79/7

(84) Designated contracting states:
BE CH DE FR NL SE

(71) Applicant: CHRIS HUDSON (INTERNATIONAL) LIMITED
Hudson House North Street
Romford Essex(GB)

(72) Inventor: Hudson, Christopher Robin
474 Belmont House Wingletye Lane
Hornchurch Essex(GB)

(72) Inventor: Ludwig, Richard Anthony
10 St Marys Lane
Upminster Essex(GB)

(74) Representative: Williams, John Francis et al,
J.F. Williams & Co 34 Tavistock Street
London WC2E 7PB(GB)

(54) A wheel mounting assembly.

(57) A wheel mounting assembly has a stub axle (10) for receiving a wheel (31). The stub axle is provided with two pairs of arms (11, 12) each of which pairs extends in wishbone configuration one to each of two sides of the stub axle (10) from positions at or near opposite ends of the stub axle (10). The free ends of the arms are adapted for pivotal mounting on a chassis by means of a tubular carrier member 13.

Fig. 1

- 1 -

## A wheel mounting assembly

This invention relates to a wheel mounting assembly and more particularly but not solely to a wheel mounting assembly suitable for attaching a wheel to a semi-trailer so as to permit the provision of fully independent suspension.

Heavy goods semi-trailers of the type which are articulated to a tractor vehicle by means of a so called fifth wheel coupling generally employ an axle which extends transversely of the chassis to support a wheel on each side of the chassis. Such configurations have employed various methods of springing but the beam axle connection between wheels prevents the provision of fully independent suspension.

Fully independent suspension systems have been employed on light vehicles e.g. motor cars but none of the systems employed are commercially viable for use on heavy goods semi-trailers. As far as we are aware a heavy goods semi-trailer with fully independent suspension has never been produced.

This invention seeks to provide a wheel mounting assembly configuration suitable for mounting wheels onto heavy goods semi-trailers, in a manner which permits the provision of fully independent suspension, which configuration is also suitable for use in other applications e.g. for light weight trailers and on vehicles themselves.

The main advantage offered by the invention is the provision of a simple wheel mounting assembly which is particularly suitable for adaption to independent suspension and which can be produced in a form suitable for use with heavy goods trailers.

According to one aspect of the invention there is provided a wheel mounting assembly comprising a stub axle having two pairs of arms in which the arms of each pair extend in wishbone configuration one to each of two sides of the stub axle from positions at or near opposite ends of the stub axle the free ends of the arms being adapted for pivotal mounting on a chassis.

The arms are preferably permanently connected to the stub axle by for example welding.

The free ends of the two arms on each side of the stub axle are preferably rigidly coupled to a common carrier member. The two carrier members may be adapted for pivotal mounting on a common axis.

The arms at one end of the stub axle may be of equal length as may the arms at the other end of the stub axle. The arms mounted at the end of the stub axle which in use extends inboard of the trailer are normally shorter than the arms mounted at the opposite end of the stub axle.

The invention also includes a vehicle or trailer provided with wheels each mounted by mounting assemblies as hereinbefore defined which mounting assemblies are pivotally mounted on the chassis of the vehicle or trailer by the adaption at the free ends of the arms.

A vehicle or trailer may have a single longitudinally extending beam chassis with the mounting assemblies pivotally mounted on the beam by the adaption at the free ends of the arms

The wheel mounting assemblies may be "sprung" by any suitable resilient means acting between the wheel mounting assembly and the vehicle or trailer chassis. Preferably a fully independent resilient means is provided for each wheel mounting assembly e.g. a pressure diaphragm or bellows containing air under compression, or adapted for connection to a pressurized source e.g. a compressor on a vehicle; a leaf or coil spring arrangement or rubber cones.

In order that the invention and its various other preferred features may be understood more easily, an embodiment thereof will now be described, by way of example only, with reference to the drawings, in which:-

Figure 1 shows a wheel mounting assembly in accordance with the invention,

Figure 2 is a rear elevation of a heavy goods semi-trailer provided with wheel mounting assemblies constructed in accordance with the invention,

Figure 3 is a side elevation of the semi-trailer of Figure 2, and

Figure 4 is a plan view of the semi-trailer of Figures 2 and 3.

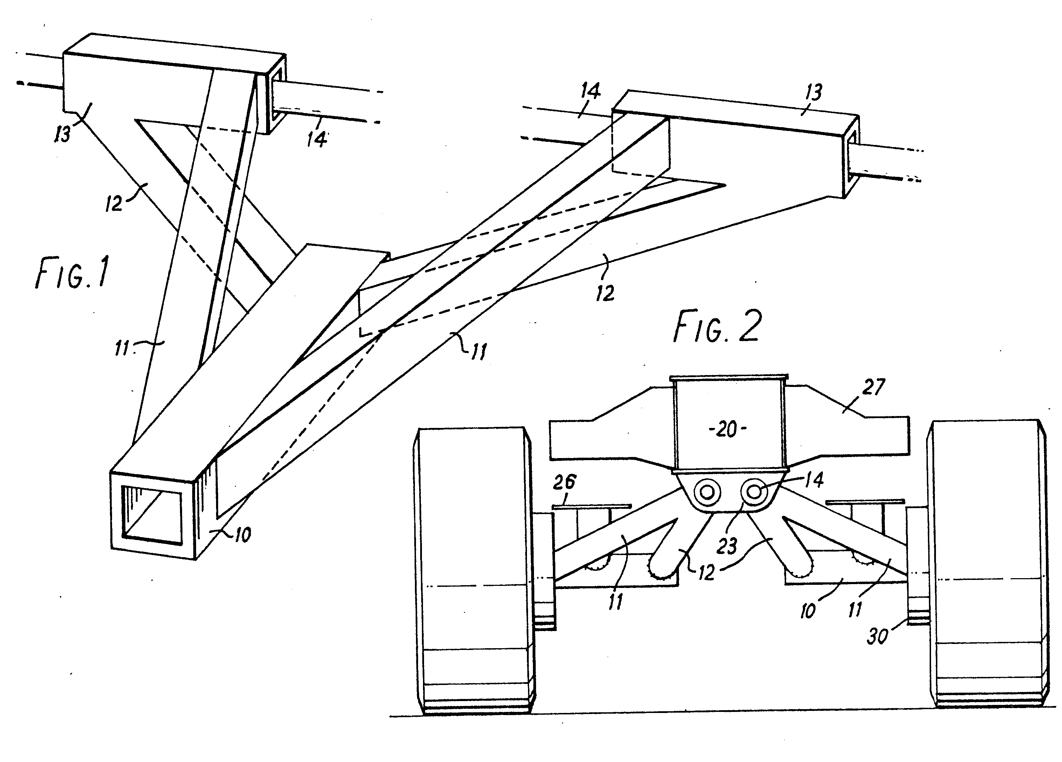

The wheel mounting assembly of Figure 1 is constructed of box section tubular steel material and has a stub axle 10 for mounting a wheel by means of a hub not shown. Welded to two opposite sides of the stub axle towards the hub end are two arms 11 of equal length. The arms 11 are divergent to form a wishbone configuration. Another pair of similar but shorter arms 12 of equal length are welded to the same opposite sides of the stub axle 10

- 4 -

at a position towards its other end. Again the arms are divergent to form a second wishbone configuration. The ends of the arms 11 and 12 remote from the stub axle on each of the two opposite sides are welded to a respective tubular carrier 13 for receipt of a trunnion or fulcrum units 14.

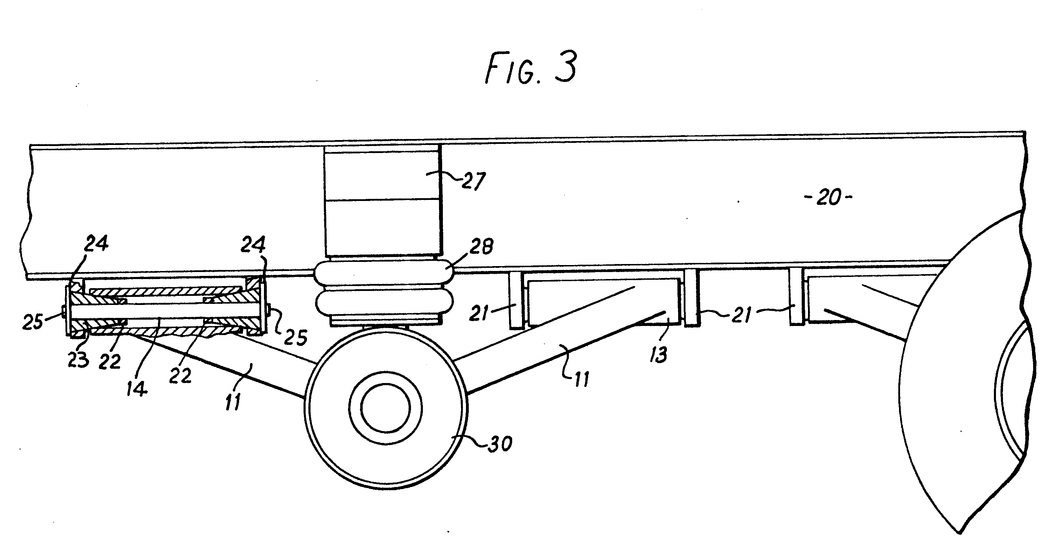

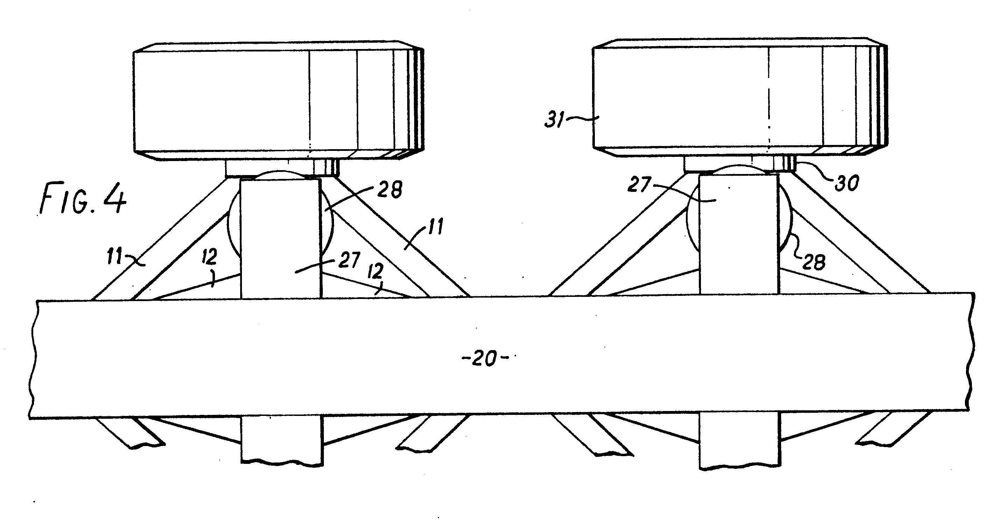

The heavy goods semi-trailer of Figures 2 to 4 employs similar wheel mounting assemblies to that shown in Figure 1 but in this case made of tubular steel of circular cross section. Like parts of the wheel mounting assemblies are given the same reference numerals as are employed in Figure 1. The semi-trailer chassis in this particular embodiment has a single longitudinally extending beam 20 of the type as described in our co-pending European Patent Application entitled "Improvements in or relating to Trailers" filed on the same day as this Application and claiming priority from British Patent Application No: 37225/77. The disclosure of that European Patent Application is hereby incorporated by reference.

The wheel mounting assemblies are each pivotally mounted on the chassis beam 20 by means of two pairs of spaced lugs or hangers 21 which receive the trunnion or fulcrum shaft 14. The fulcrum shaft 14 is provided with two projecting flanges 22 each disposed approximately at one third of the shaft length from a respective end. These flanges serve as stops for two conical rubber and steel bonded bushes 23 which have an axial hole of diameter greater than the diameter of the fulcrum shaft and less than the outside diameter of the flanges 22 of the fulcrum shaft which extends axially therethrough. The inside of the tubular carrier 13 or alternatively the inner surface of bushes (not shown) located in each end of the carrier is of frusto-conical form the conical section reducing in a direction inwardly of the carrier and has a conical cross section similar to that of the bushes 23. The

mounting assembly is secured to the hangers 21 by aligning the hole through the tubular carrier with two holes disposed oppositely and in axial alignment in the hangers 21.   These holes are sufficiently large to permit insertion of the bushes 23 therethrough and are of diameter similar to the inside end diameter of the carrier 13. The fulcrum shaft 14 is now inserted through the aligned holes in the hangers 21 and through the carrier 13. Conical bushes 23 pushed one onto each end of the fulcrum shaft are followed by a geavy metal compression washer 24 of diameter larger than the hole in the hangers 21. Each end of the fulcrum shaft is provided with a screw threaded hole into which a bolt is screwed to secure the assembly.   By tightening the bolts 25 the bushes 23 are compressed against the conical inside surface of the tubu - lar carrier and provide a firm yet resilient mount which permits sufficient movement of the stub axles against a resilient suspension system as will now be described.

The stub axle 10 is provided with a mounting plate 26 for securing a "spring" which acts between the mounting plate and a bearer 27 which extends laterally of the beam 20.   The spring supports the mounting assembly and provides a resilient suspension system therefore.   In the embodiment described the "spring" is an air spring 28 which comprises a bellows or diaphragm arrangement which is adapted to be fed with compressed air from the compressor of the brake system of a tractor vehicle. Such a system provides fully independent suspension for each wheel.   Any other form of springing can be employed e.g. leaf or coil springs or rubber cones and the suspension can be independent or non independent as required.

The stub axles are provided with hub and brake plate assemblies 30 and wheels 31.

The air spring system employed in the illustrated embodiment may be provided with means for reducing body roll. It is envisaged that this could be effected by pressure cross coupling between air springs. An alternative or additional means for reducing roll would be a conventional anti roll bar and such an anti roll bar is applicable to trailers using the mounting assembly with alternative suspension systems.

Although the wishbone mounting assembly described is formed as an integral unit it could be constructed in a demountable form by for example providing the carrier 13 and stub axle 10 with means for releasably securing separate arms 11 and 12 for example suitable flanges could be provided. Such a construction is likely to be weaker but could be useful for constructing trailers or other vehicles for carrying light loads.

In the construction illustrated the arms 11 are of equal length as are the arms 12. Although equal length arms are preferred it is envisaged that different length arms may be required for specific applications.

In the embodiments described the arms 11 at the outer end of the stub axle 10 are joined to the inner ends of the carriers 13 and the arms 12 at the inner end of the stub axle 10 are joined to the outer ends of the carriers 13. An alternative configuration is possible in which the arms 11 are connected between the outer end of the stub axle 10 and the outer end of the carriers 13 and shorter arms 12 are connected between the inner end of the stub axle 10 and the inner ends of the carriers 13.

0001337

- 1 -

Claims:

1.      A wheel mounting assembly comprising a stub axle (10) characterized in that two pairs of arms (11, 12) are provided on the stub axle (10) and the arms of each pair extend in wishbone configuration one to each of two sides of the stub axle (10) from positions at or near opposite ends of the stub axle the free ends of the arms being adapted for pivotal mounting on a chassis.

2.      A wheel mounting assembly as claimed in Claim 1, wherein the arms (11, 12) are permanently connected to the stub axle (10).

3.      A wheel mounting assembly as claimed in Claim 2, wherein the arms (11, 12) are connected to the stub axle by welding.

4.      A wheel mounting assembly as claimed in any one of the preceding claims, wherein the free ends of the two arms (11, 12) on each side of the stub axle (10) are rigidly coupled to a common carrier member (13).

5.      A wheel mounting assembly as claimed in Claim 4, wherein the two carrier members (13) are adapted for pivotal mounting on a common axis.

6.      A wheel mounting assembly as claimed in Claim 4 or 5, wherein the carrier members (13) are tubular for receiving a trunnion shaft.

7.     A wheel mounting assembly as claimed in Claim 6, wherein the ends of the carrier members (13) have inner surfaces which are of frusto-conical form tapering in a direction inwardly of the carrier member.

8.     A wheel mounting assembly as claimed in Claim 7, wherein the frusto-conical inner surfaces are provided by bushes located in the ends of the carrier members.

9.     A wheel mounting assembly as claimed in Claim 7 or 8 provided with a pair of resilient bushes (22) having an external surface configuration of frusto-conical form of dimensions similar to the inner surface of the carrier member (13), a trunnion shaft (14) insertible in the carrier member so as to project from opposite ends and means (24, 25) for urging the resilient bushes (22) into wedging engagement in the carrier member (13).

10.    A wheel mounting assembly as claimed in Claim 9, wherein the trunnion shaft (14) has stop means (22) preventing displacement of the resilient bushes (22) beyond a predetermined location to permit compression of the resilient bushes (22) and enhancement of the wedging engagement.

11.    A wheel mounting assembly as claimed in any one of the preceding claims, wherein the arms (12) at one end of the stub axle (10) are of equal length.

12.    A wheel mounting assembly as claimed in Claim 11, wherein the arms (11) at the other end of the stub axle (10) are of equal length.

13.    A wheel mounting assembly as claimed in any one of the preceding claims, wherein the arms (12) mounted at the end of the stub axle (10) which in use extends inboard of a trailer or vehicle chassis (20) are shorter than the arms (11) mounted at the opposite end of the stub axle (10).

14.    A wheel mounting assembly as claimed in any one of the preceding claims formed of tubular material.

15.    A vehicle or trailer provided with wheels (31) each mounted by mounting assemblies as claimed in any one of the preceding claims, which mounting assemblies are pivotally mounted on the chassis (20) of the vehicle or trailer by the adaption at the free ends of the arms.

16.    A vehicle or trailer as claimed in Claim 15, wherein the mounting assemblies are mounted on the chassis (20) by means of spaced lugs (21) disposed on the chassis (20) two to each side of the stub axle (10).

17.    A vehicle or trailer as claimed in Claim 15 or 16, comprising a single longitudinally extending beam (20) with the wheel mounting assemblies pivotally mounted thereon.

18.    A vehicle or trailer as claimed in any one of Claims 15 to 17, wherein the wheel mounting assemblies are sprung by resilient means (28) acting between the mounting assembly and the trailer chassis (20).

19.    A vehicle or trailer as claimed in Claim 18, wherein the resilient means (28) comprises a pressure diaphragm or bellows.

0001337

- 4 -

20. A vehicle or trailer as claimed in Claim 19, wherein the pressure diaphragm or bellows contains air under compression.

21. A vehicle or trailer as claimed in Claim 19, wherein the pressure diaphragm or bellows is adapted for connection to a pressure source.

22. A vehicle or trailer as claimed in Claim 19, 20 or 21 wherein the pressure diaphragm or bellows of one wheel assembly is cross connected to the pressure diaphragm or bellows of a wheel assembly on the opposite side of the vehicle or trailer.

23. A vehicle or trailer as claimed in Claim 18, wherein the resilient means comprises a spring.

24. A vehicle or trailer as claimed in Claim 18, wherein the resilient means comprises a rubber cone.

0001337

FIG. 1

FIG. 2

FIG. 3

FIG. 4

European Patent
Office

**EUROPEAN SEARCH REPORT**

0001337
Application number

EP 78 30 0355

## DOCUMENTS CONSIDERED TO BE RELEVANT

| Category | Citation of document with indication, where appropriate, of relevant passages | Relevant to claim |
|---|---|---|
| | FR - A - 1 302 012 (STERCKEMAN)  <br>* Page 1, right-hand column, last butone paragraph to page 1, left-hand column, paragraph 5; figures 1-4 * | 1,2,4, 5,11, 15,16, 18,23 |
| | FR - A - 2 292 002 (SYMONS)  <br>* Page 4, line 26 to page 7, line 27; figures 1-6 * | 1,2,11, 14-16, 18,23 |
| | FR - A - 1 414 006 (FRANKEL)  <br>* Whole document * | 1-3,11, 15,18, 23 |
| | GB - A - 476 591 (McMAHON)  <br>* Page 3, lines 29-69; figures 1,2 * | 1,2,11, 14-18 |
| | FR - A - 1 418 000 (U.C.D.)  <br>* Page 2; figures 1-3 * | 1,2,11, 15,16, 18-22 |
| | FR - A - 724 330 (TATRA)  <br>* Page 1, line 57 - page 2, line 35; figures 1-5 * | 1,11, 15-18, 23 |
| | US - A - 2 203 510 (SCHROETER)  <br>* Page 1, left-hand column, lines 34-47; figures 8,9 * | 1,11, 12,15, 17,18 23 |
| | ./. | |

### CLASSIFICATION OF THE APPLICATION (Int. Cl.²)

B 60 G 3/06  
7/02

### TECHNICAL FIELDS SEARCHED (Int.Cl.²)

B 60 G  
B 62 D  
B 60 B

### CATEGORY OF CITED DOCUMENTS

X: particularly relevant  
A: technological background  
O: non-written disclosure  
P: intermediate document  
T: theory or principle underlying the invention  
E: conflicting application  
D: document cited in the application  
L: citation for other reasons

&: member of the same patent family, corresponding document

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | GB - A - 908 084 (VAUXHALL)<br><br>* Page 1, line 38 to page 2, line 40; figures 1-3 *<br><br>-- | 1,11, 15,18, 23 | |
| | US - A - 3 180 653 (PASSMAN)<br><br>* Column 1, line 40 to column 2, line 45; figures 1-3 *<br><br>-- | 1,11, 15,16, 18,24 | |
| | FR - A - 1 189 586 (SILENTBLOC)<br><br>* Whole document *<br><br>-- | 7-10 | TECHNICAL FIELDS SEARCHED (Int. Cl.²) |
| A | FR - A - 2 016 068 (PEAK TRAILERS) | 1 | |
| A | FR - A - 1 146 410 (SAUNOIS) | 1 | |
| A | GB - A - 923 397 (PEAK TRAILERS) | 1 | |
| A | GB - A - 430 549 (STEEL WHEEL) | 1 | |
| A | US - A - 2 732 219 (MILLER)<br><br>---- | 1 | |